(19) Europäisches Patentamt / European Patent Office / Office européen des brevets

(11) **EP 3 624 469 B1**

(12) **EUROPEAN PATENT SPECIFICATION**

(45) Date of publication and mention of the grant of the patent:
**26.07.2023 Bulletin 2023/30**

(21) Application number: **19192985.0**

(22) Date of filing: **22.08.2019**

(51) International Patent Classification (IPC):
**H04W 52/24** (2009.01)    **H04W 52/32** (2009.01)
**H04W 4/44** (2018.01)    **H04W 4/02** (2018.01)
**H04W 4/021** (2018.01)    **H04W 52/28** (2009.01)

(52) Cooperative Patent Classification (CPC):
**H04W 4/44; H04W 4/023; H04W 52/246;
H04W 52/283; H04W 52/322;** H04W 4/021

(54) **METHODS AND APPARATUSES FOR TRANSMITTING AND RECEIVING DATA, AND STORAGE MEDIUMS**

VERFAHREN UND VORRICHTUNGEN ZUM SENDEN UND EMPFANGEN VON DATEN UND SPEICHERMEDIEN

PROCÉDÉS ET APPAREILS DE TRANSMISSION ET DE RÉCEPTION DE DONNÉES ET SUPPORTS D'ENREGISTREMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.09.2018 CN 201811064053**

(43) Date of publication of application:
**18.03.2020 Bulletin 2020/12**

(73) Proprietor: **Apollo Intelligent Connectivity (Beijing) Technology Co., Ltd.**
**Beijing 100176 (CN)**

(72) Inventors:
• **Bao, Zewen**
  **Beijing, 100085 (CN)**
• **Hu, Xing**
  **Beijing, 100085 (CN)**

(74) Representative: **advotec.**
**Patent- und Rechtsanwaltspartnerschaft Tappe mbB**
**Widenmayerstraße 4**
**80538 München (DE)**

(56) References cited:
**US-A1- 2004 230 345**

• **3GPP: "3rd Generation Partnership Project; Technical Specification Group Services and System Aspects; Study on enhancement of 3GPP Support for 5G V2X Services (Release 15)", 3GPP TR 22.886 V15.1.0, 17 March 2017 (2017-03-17), pages 1-58, XP055625569, Retrieved from the Internet: URL:https://www.3gpp.org/ftp/Specs/archive /22_series/22.886/ [retrieved on 2019-09-24]**

**EP 3 624 469 B1**

**Description**

**FIELD**

Implementations of the present disclosure generally relate to car networking and, more particularly, to methods and apparatuses for transmitting and receiving data, and computer storage mediums in car networking.

**BACKGROUND**

With the development of the car networking (Internet of vehicles) technology, the technology of vehicle to everything (V2X) has been proposed. The vehicle may communicate with a variety of external entities (e.g., collection devices, server devices, control centers, etc.) via V2X to exchange various information for assisting vehicle driving. In general, a variety of objects (e.g., surrounding buildings, roads, vehicles, pedestrians, etc.) will be involved in the road environment where the vehicle is located, and these objects will involve a variety of information. Various collection devices may be deployed in the road environment to collect the above information, and the collected information is transmitted to the vehicle traveling to the vicinity of the server device via the server device connected to the collection device to assist in vehicle control.

Vehicle control will greatly depend on the timely acquisition of such information. However, the communication bandwidth of existing V2X is limited, and delays may occur due to the influence of the surrounding environment or other factors when transmitting various information. Therefore, at this time, how to handle transmission and reception of data becomes a research hotspot. Thus, it is desirable to be able to provide a technical solution for transmitting and receiving data in a more convenient and efficient manner.

3GPP: "3rd Generation Partnership Project; Technical Specification Group Services and System Aspects; Study on enhancement of 3GPP Support for 5G V2X Services (Release 15)", 3GPP TR 22.886 V15.1.0, 17 March 2017 (2017-03-17), pages 1-58, XP055625569 formulates the specifications of the third-generation technology based on the GSM core network and UTRA technology as the wireless interface, which can be applied to a field of urban driving and provides basic and general communication technical supports.

**SUMMARY**

In accordance with an example implementation of the present disclosure, solutions for transmitting data and receiving data is provided.

In embodiments of the present disclosure, a method of transmitting data is provided. In the method, a set of objects in a road environment is identified based on collection data associated with the road environment from a server device. The set of objects is divided into at least one subset based on a distance between each of the set of objects and server devices. For a subset in the at least one subset, a data packet is generated based on a portion of the collection data associated with objects in the subset. The generated data packet is transmitted to at least one client device, the at least one client device being located in a region associated with the first region where the objects in the subset are located.

In an embodiment, transmitting the data packet may include: determining a transmission power for broadcasting the data packet; and broadcasting the data packet based on the transmission power, such that the data packet is received by the at least one client device.

In an embodiment, determining the transmission power may include: determining a distance range between the at least one client device and the server device based on the region; and determining the transmission power based on the distance range.

In an embodiment, the first region is a subset of the region.

In an embodiment, determining the transmission power may include: obtaining a transmission factor of a broadcast signal transmitted in the road environment; determining a maximum distance value in the distance range; obtaining a receiving power threshold of the at least one client device; and determining the transmission power based on the transmission factor, the maximum distance value and the receiving power threshold.

In an embodiment, generating the data packet may include: collecting traffic command information associated with the road environment; and updating the data packet based on the traffic command information.

In an embodiment, the method also includes: classifying the objects in the subset into static objects and moving objects; generating a static data packet based on a portion of the collection data associated with the static objects, and generating a motion data packet based on a portion of the collection data associated with the moving objects; and transmitting the static data packet with a first transmission frequency and transmitting the motion data packet with a second transmission frequency, the first transmission frequency being lower than the second transmission frequency.

In embodiments of the present disclosure, an apparatus for transmitting data is provided. The apparatus includes: one or more processors; a memory configured to store one or more programs, in which when the one or more programs are executed by the one or more processors, the one or more processors are configured to: identify a set of objects in a road environment based on collection data associated with the road environment from a server device; divide the set of objects into at least one subset based on a distance between each of the set of objects and the server device; generate, for a subset in the at least one subset, a data packet based on a portion of the collection data associated with objects in the subset; and transmit the data packet to at least one client device, the at least one client device being located in a region associated with a first region where the objects in the subset are located.

In an embodiment, the one or more processors transmit the data packet by performing acts of: determining a transmission power for broadcasting the data packet; and broadcasting the data packet based on the transmission power, such that the data packet is received by the at least one client device.

In an embodiment, the one or more processors determine the transmission power by performing acts of: determining a distance range between the at least one client device and the server device based on the region; and determining the transmission power based on the distance range.

In an embodiment, the first region is a subset of the region.

In an embodiment, the one or more processors determine the transmission power by performing acts of: obtaining a transmission factor of a broadcast signal transmitted in the road environment; determining a maximum distance value in the distance range; obtaining a receiving power threshold of the at least one client device; and determining the transmission power based on the transmission factor, the maximum distance value and the receiving power threshold.

In an embodiment, the one or more processors generate the data packet by performing acts of: collecting traffic command information associated with the road environment; and updating the data packet based on the traffic command information.

In an embodiment, the one or more processors are configured to: classify the objects in the subset into static objects and moving objects; generate a static data packet based on a portion of the collection data associated with the static objects, and to generate a motion data packet based on a portion of the collection data associated with the moving objects; and transmit the static data packet with a first transmission frequency and to transmit the motion data packet with a second transmission frequency, the first transmission frequency being lower than the second transmission frequency.

In embodiments of the present disclosure, a computer-readable storage medium is provided. The storage medium has a computer program stored thereon, and the computer program is executed by a processor to implement the method for transmitting data proposed in the first aspect of embodiments of the present disclosure.

In embodiments of the present disclosure, a method for receiving data is provided. The method may include: receiving, at a client device, at least one data packet transmitted from a server device, a data packet in the at least one data packet being generated based on collection data associated with at least one object described by the data packet; selecting a data packet from the at least one data packet, the client device being located in a region associated with a first region where the at least one object described by the data packet selected is located; and parsing the data packet selected to obtain collection data associated with objects in the road environment within the first region.

In an embodiment, selecting the data packet may include selecting the data packet based on at least one of: a receiving signal intensity and a receiving time associated with the at least one data packet.

In an embodiment, the client device is deployed at a vehicle, and the method may also include: controlling traveling of the vehicle based on the collection data.

In embodiments of the present disclosure, an apparatus for receiving data is provided. The apparatus includes: one or more processors; a memory configured to store one or more programs, in which when the one or more programs are executed by the one or more processors, the one or more processors are configured to: receive, at a client device, at least one data packet transmitted from a server device, a data packet in the at least one data packet being generated based on collection data associated with at least one object described by the data packet; select a data packet from the at least one data packet, the client device being located in a region associated with a first region where the at least one object described by the data packet selected is located; and parse the data packet selected to obtain collection data associated with objects in the road environment within the first region.

In an embodiment, the one or more processors are configured to select the data packet based on at least one of: a receiving signal intensity and a receiving time associated with the at least one data packet.

In an embodiment, the client device is deployed at a vehicle, and the one or more processors are configured to control traveling of the vehicle based on the collection data.

In embodiments of the present disclosure, a computer readable medium is provided. The medium has a computer program stored thereon, the computer program being executed by a processor to implement the method for receiving data according to the fifth aspect of embodiments of the present disclosure.

The content described in the Summary is not intended to limit the key or important features of the implementation of the present disclosure, and is not intended to limit the scope of the disclosure. Other features of the present disclosure will be readily understood by the following description.

## BRIEF DESCRIPTION OF THE DRAWINGS

The above and other features, advantages and aspects of various embodiments of the present disclosure will become more apparent with reference to the figures and following detail descriptions. In the drawings, the same or similar reference numerals indicate the same or similar elements, in which:

Fig. 1 schematically illustrates a diagram of an application environment where a technical solution according to an exemplary implementation of the present disclosure may be employed;
Fig. 2 is a block diagram schematically illustrating a technical solution according to an exemplary implementation of the present disclosure;
Fig. 3 schematically illustrates a flow chart of a method for transmitting data in accordance with an exemplary implementation of the present disclosure;
Fig. 4 schematically illustrates a block diagram of a configuration at a server device in accordance with an exemplary implementation of the present disclosure;
Fig. 5A schematically illustrates a block diagram of a data structure of collected data according to an exemplary implementation of the present disclosure, and Fig. 5B schematically illustrates a data structure of a data packet according to an exemplary implementation of the present disclosure;
Fig. 6 is a block diagram that schematically illustrates changes in received signal strength at a client device in accordance with an exemplary implementation of the present disclosure;
Fig. 7 schematically illustrates a flow diagram of a method for receiving data in accordance with an exemplary implementation of the present disclosure;
Fig. 8 schematically illustrates a flow chart of a method for adjusting a received power in accordance with an exemplary implementation of the present disclosure;
Figs. 9A and 9B schematically illustrate block diagrams of apparatuses for transmitting and receiving data, respectively, according to an exemplary implementation of the present disclosure; and
Fig. 10 illustrates a block diagram of a computing device capable of implementing various implementations of the present disclosure.

## DETAILED DESCRIPTION

Embodiments of the present disclosure will be described in more detail below with reference to the accompanying drawings. Although certain embodiments of the present disclosure are illustrated in the drawings, it should be understood that the present disclosure may be implemented in various forms and should not be construed as limited to the embodiments set forth herein. Instead, providing these embodiments is to fully and completely understand the present disclosure. It should be understood that, the drawings and embodiments of the present disclosure are merely illustrative and should not be considered as limiting the scope of the disclosure.

In the description of the embodiments of the present disclosure, the term "comprise" and its equivalents are to be understood as an open "include" (a non-exclusive "include"), i.e., "include but is not limited to". The term "based on" should be understood as "based at least in part (at least partially based on)". The term "one embodiment" or "an embodiment" should be taken to mean "at least one embodiment". The terms "first", "second" and the like may refer to different or identical objects. Other explicit and implicit definitions may also be included in the followings.

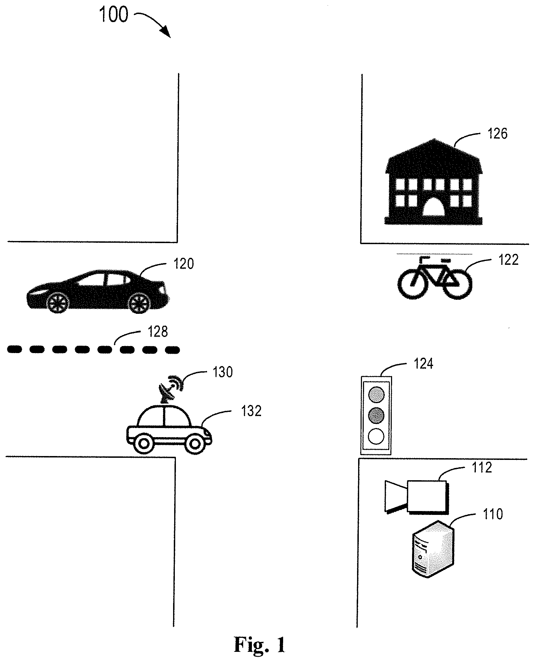

For ease of description, an application environment of an implementation of the present disclosure will first be described with reference to Fig. 1. In particular, Fig. 1 schematically illustrates an illustration of an application environment 100 in which a technical solution in accordance with an exemplary implementation of the present disclosure may be employed. Fig. 1 shows an example of a road environment with an intersection, and a collection device 112 such as a camera, a laser radar or the like may be deployed near the intersection. Here, the collection device 112 may acquire collection data of various objects in the vicinity. For example, data regarding a vehicle 120 or a bicycle 122 traveling on the road, traffic lights 124, roadside buildings 126, a lane line 128, and the like may be acquired.

It will be understood that Fig. 1 only schematically shows a specific example of deploying the server device 110 and the collection device 112 in an intersection environment, in other application environments, the server device 110 and the collection device 112 may be deployed along the road or on moving objects such as collecting vehicles and unmanned aerial vehicles. It will be appreciated that the collection device 112 may be located in the server device 110, or the collection device 112 may be coupled to the server device 110, and the server device 110 may be used to transmit the collected collection data to the vehicle 130 traveling in the vicinity.

It has been proposed to transfer collection data between the server device 110 and the client device 130 deployed at the vehicle 132. Current technical solutions typically broadcast the collection data within a predetermined range near server device 110 at a greater power. However, due to the limitation of the transmission bandwidth of the server device 110, when the collection data related to a large number of objects is collected, the current transmission bandwidth does not ensure that the transmission may be timely and accurately transmitted to the client device 130, which results in a low transmission efficiency of the server device 110. On the other hand, the broadcasted collection data related to all objects will be received at the client device 130. At this time, the client device 130 needs to select interested parts from a large amount of collected data, thereby causing excessive computing resources and time overhead. Thus, it is desirable to develop a technical solution for transmitting and receiving collection data in a more efficient manner.

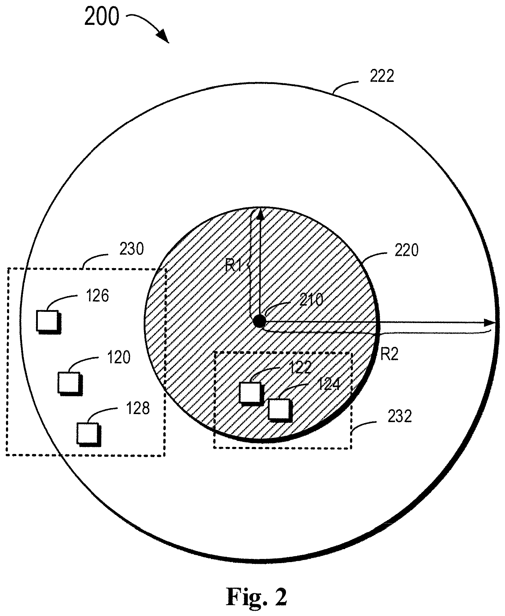

In order to at least partially address the deficiencies in the above-described technical solutions, in accordance with an exemplary implementation of the present disclosure, a technical solution for transmitting collection data between a server device 110 and a client device 130 is provided. In the following, an exemplary implementation of the present disclosure will be generally described with reference to Fig. 2.

Fig. 2 schematically illustrates a block diagram 200 of a technical solution in accordance with an exemplary implementation of the present disclosure. Fig. 2 schematically shows an illustration of a peripheral region centered at the location 210 of the server device 110. The first region 220 having a radius ranging from 0 to R1 (for example, 50 m) is shown in a shaded circular region, and the second region 222 having a radius ranging from R1 to R2 (for example, 100 m) is shown in a blank circular region. At this time, the shaded first region 220 represents a region having a radius ranging from 0 to 50 m from the position 210 of the server device 110, and the second region 222 represents a region having a radius ranging from 50 m to 100 m.

It will be understood that although only two regions 220 and 222 determined by radius R1 and R2 are shown schematically in Fig. 2, there may be more scopes in accordance with an exemplary implementation of the present disclosure. For example, three regions may be determined in terms of distances of 0-50 m, 50 m-100 m, and 100 m-200 m.

According to an exemplary implementation of the present disclosure, a set of objects 120, 122, 124, 126 may be based on distances between the location 210 and each in the set of objects 120, 122, 124, 126, 128 corresponding to the collection data, to divide the objects 122 and 124 (with the distances smaller than R1) to a first subset 232, and the objects 126, 120 and 128 (with the distances between R1 and R2) are divided to a second subset 230.

According to an exemplary implementation of the present disclosure, related collection data of the objects included in each subset may be encapsulated into a corresponding data packet. For example, the collection data of objects 122, 124 in the range of 0-50 m may be encapsulated into the first data packet 232, while the collection data of objects 126, 120, and 128 in the range of 50-100 m may be encapsulated into the second data packet 230. The particular data packet may then be broadcasted to at least one client device desiring to receive the particular data packet.

For example, a vehicle within a range 0-50 m from the server device 110 may only care about the content of the first data packet 232 (i.e., which objects are in the range of 0-50 m), and thus only the first data packet 232 may be sent to these vehicles, while the data packets of objects in the range beyond 50 m may not be sent to these vehicles. For another example, a vehicle within a range 50-100 m from the server device 110 may only care about the content of the second data packet 230 (i.e., which objects are in the range of 50 m-100 m), and thus only the second data packet 230 may be sent to these vehicles, the packets of objects within a range of 0-50 m may not be sent to these vehicles.

In the above implementation, by dividing a large number of objects in a large range into different subsets, for each subset, data packets of objects in the subset may be transmitted. In this way, on the one hand, the bandwidth during transmission may be reduced, and the reliability and stability of data transmission are improved. On the other hand, it is also possible to reduce the overhead in computing resources and time for the client device 120 to process the received data packets.

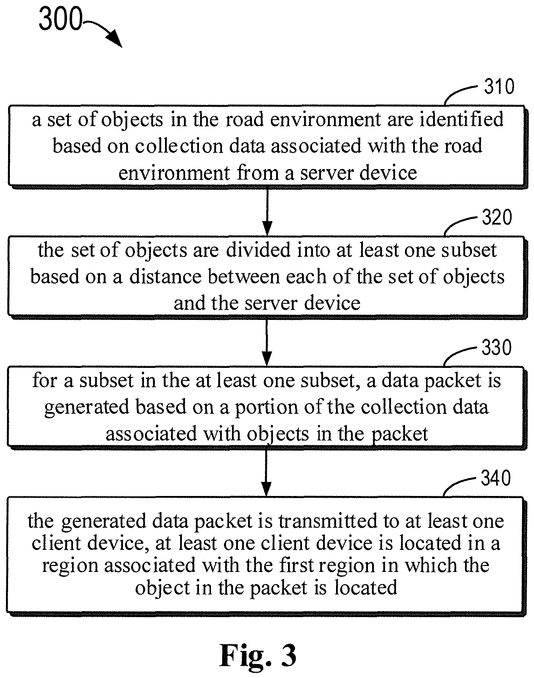

Further details regarding the transmission of the collection data will be described in detail below with reference to Fig. 3. Fig. 3 schematically illustrates a flow diagram of a method 300 for transmitting data in accordance with an exemplary implementation of the present disclosure. At block 310, a set of objects in the road environment are identified based on collection data associated with the road environment from a server device 110. The collection data described herein may be data collected by the collection device 112 coupled to the server device 110.

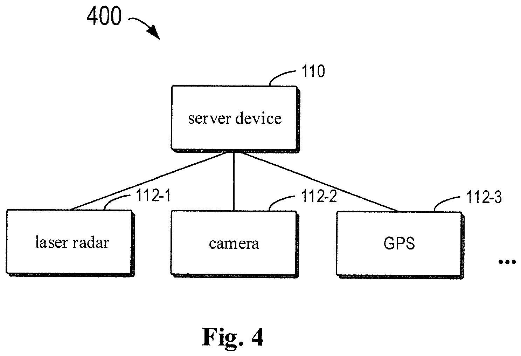

Fig. 4 schematically illustrates a block diagram 400 of a configuration at a server device 110 in accordance with an exemplary implementation of the present disclosure. According to an exemplary implementation of the present disclosure, the server device 110 may be coupled to multiple types of collection devices. For example, the server device 110 may be coupled to: a laser radar 112-1, configured to acquire point cloud data associated with an object; a camera 112-2, configured to acquire image data associated with the object. Further, the server device 110 may also be coupled to a GPS (Global Positioning System) collector 112-3, configured to obtain a location of server device 110, and the like. It will be understood that, although it is illustrated in Fig. 4 that the server device 110 is coupled to respective collection devices 112-1, 112-2, and 112-3, respectively, the server device 110 may also include the above collection devices in accordance with exemplary implementations of the present disclosure.

Returning to Fig. 3, at block 320, the set of objects are divided into at least one subset based on a distance between each of the set of objects and the server device 110. Referring back to Fig. 2, there are a set of objects 120, 122, 124, 126, and 128 around the server device 110, which may be divided into two subsets based on the distance between each of the set of objects and the location 210 of the server device 110. For example, the objects 122 and 124 located within a range of distances 0 to R1 (a first region 220) may be divided into a first subset 232, while the objects 126, 120and 128 located within a range of distances R1 to R2 (a second region 222) may be divided into a second subset 230.

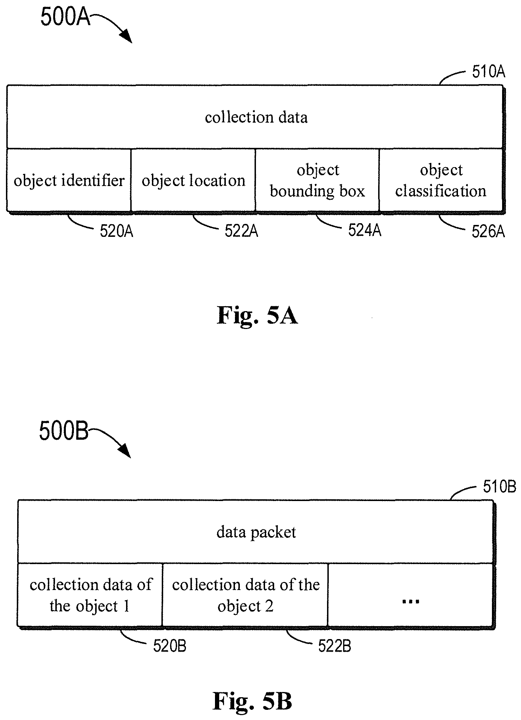

At block 330 of Fig. 3, for a subset in the at least one subset, a data packet is generated based on a portion of the collection data associated with objects in the packet. According to an exemplary implementation of the present disclosure, the collection data may include content in various aspects. Fig. 5A schematically illustrates a block diagram 500A of a data structure of collection data 510A in accordance with an exemplary implementation of the present disclosure. As shown in Fig. 5, the collection data 510A may include multiple fields: an object identifier 520A, an object location 522A, an object bounding box 524A, and an object classification 526A and the like.

In this implementation, the object identifier 520A is used to uniquely identify the object. The object location 522A is used to indicate the location of the object. Here, the local coordinate system used by the collection device 112 may be used to represent the object position 522A, or the world coordinate system may be used to indicate the position of the object. The object bounding box 524A is used to describe the space occupied by the object, for example, may be represented by the length, width, height of the object, or, the space range occupied by the object in the world coordinate system may be determined based on the object position 522A and the length, width and height of the object. Further, object classification 526A may indicate which classification the object belongs to. A variety of classifications may be employed, for example, object classification 526A may include vehicles, bicycles, pedestrians, roadside buildings, and the like. As another example, object classification 526A may also simply include stationary objects and moving objects.

It will be understood that Fig. 5A merely schematically illustrates an example of a data structure for the collected data 510A of an object, and in other implementations, the collection data 510A may also include more or fewer fields. After the collection data of the respective objects have been collected, the corresponding first data packet 232 and second data packet 230 may be generated for the objects in the first region 220 and the second region 222, respectively, as described above. In particular, the first data packet 232 may be generated based on the collection data about the objects 122 and 124, and the second data packet 230 may be generated based on the collection data about the objects 126, 120, and 128. Here, data packets may be generated in a variety of ways.

Fig. 5B schematically illustrates a block diagram 500B of a data structure of a data packet 510B in accordance with an exemplary implementation of the present disclosure. As shown in Fig 5B, the data packet 510B may include collection data associated with various objects within a region. Suppose there is an object 1, an object 2, a ... in a certain region. Then, the data packet 510B for the region at this time may include the collection data 520B of the object 1, the collection data 522B of the object 2, and the like. It will be understood that although merely an example of combining collection data about individual objects to form a data packet 510B is schematically illustrated in Fig. 5B, in accordance with an exemplary implementation of the present disclosure, the collection data may also be compressed to form the data package 510B. With the above exemplary implementation, the amount of data during transmission may be reduced. According to an exemplary implementation of the present disclosure, the collection data may also be encrypted to transmit data in a more secure and reliable manner.

Returning to Fig. 3, at block 340, the generated data packet is transmitted to at least one client device 130. Here, at least one client device is located in a region associated with the first region in which the object in the packet is located. The term "associated region" refers to the region where the vehicle that expects to receive the data packet is located. Continuing with the example of Fig. 2 above, for the first data packet 232, the first data packet 232 includes collection data relating to objects 122 and 124 within the first region 220, where the associated region may be the first region 220, and thus the client device at the vehicle within the first region 220, will receive the first data packet 232. For the second data packet 230, the second data packet 230 includes collection data relating to objects 126, 120, and 128 within the second region 222, where the associated region may be the first region 220, and thus the client device at the vehicle within the first region 222 will receive the second data packet 230.

It is described above that the region where the vehicle is located is the same as the region where the object is located. According to an exemplary implementation of the present disclosure, the region where the object is located may be larger than the region where the vehicle is located. In other words, the range where the vehicle is located may be smaller. Referring to the example of Fig. 2 again, for example, for a second region 222 having a radius ranging from R1 to R2, the data package of the object in an annular region with the radius ranging from R1-d (e.g., d=10m or other values) to R2 may be sent to the vehicle located within the second region 222. Alternatively, an expansion may also be made at two boundaries of the second region 222, for example, the data package of the object in an annular region with the radius ranging from R1-d to R2+d may be sent to the vehicle located within the second region 222.

In the above exemplary implementation, the region where the object is located is larger than the region where the vehicle that is to receive the packet is located. In this way, it may be ensured that the client device 130 is able to receive information of objects that are larger than the region where itself locates. It is in turn ensured that the client device 130 located near the edge of each region may continuously receive information of objects within the interested region.

According to an exemplary implementation of the present disclosure, a data packet may be transmitted in a broadcast manner, and a transmission power for broadcasting a data packet may be determined according to a range where the client device 130 that is expected to receive the data packet is located. In this way, when a data packet is broadcasted based on the transmission power, the broadcasted data packet may be made to be received by at least one client device that desires to receive the data packet. With the above exemplary implementation, by determining the respective transmission power for each data packet, on the one hand it may be ensured that the client device interested in the data packet may receive the transmitted data packet. On the other hand, since only data packets including collection data of a part of objects need to be transmitted at each broadcast, the amount of data transmission per broadcast will be reduced, and thus the collection data may be transmitted with limited bandwidth and the situation of insufficient bandwidth may be alleviated.

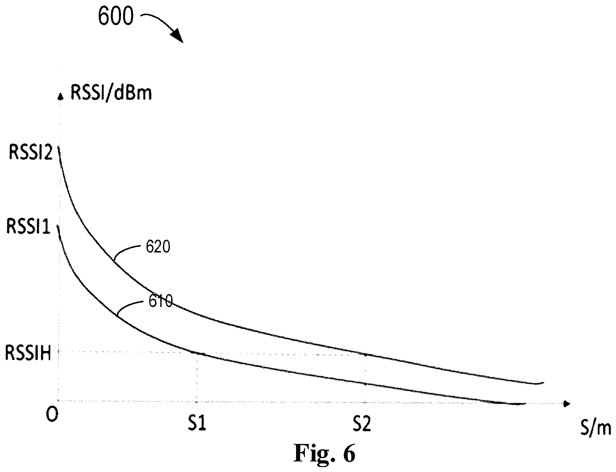

It will be understood that when the transmission power is constant, the strength of the signal received by the client device 130 will vary with the distance between the client device 130 and the server device 110. The greater the distance, the lower the strength of the received signal. In particular, Fig. 6 schematically illustrates a block diagram 600 of a variation in received signal strength in accordance with an exemplary implementation of the present disclosure. In Fig. 6, the abscissa indicates the distance S (in m) between the client device 130 and the server device 110, and the ordinate indicates the received signal strength indicator RSSI (in dBm). Since each client device has its own resolvable signal strength threshold RSSIH, the transmission power of the server device 110 needs to ensure that the client device 130 in the interested region can receive the corresponding data packet.

According to an exemplary implementation of the present disclosure, a range of distances between the at least one client device 130 and the server device 110 may be determined based on the region, and the transmission power may be determined based on the range of distances. As shown in Fig. 6, a curve 610 represents the strength of the signal received within the interested region of the first data packet 232, while curve 620 represents the strength of the signal received within the interested region of the second data packet 230. It is necessary to ensure that the received signal strength at the point farthest from the server device 110 in each region of interest is greater than RSSIH. With the above exemplary implementation, since the transmission power is determined based on the distance between the client device 130 and the server device 110 that are expected to receive the data packet, the transmission power may ensure that the client device 130 may be at its own threshold. The collection data from the client device 110 is received.

According to an exemplary implementation of the present disclosure, the transmission power may be determined based on a specific environment where a broadcast signal is transmitted. Specifically, the relationship between the distance S between the server device 110 and the client device 130 and the received signal strength RSSI may be expressed as Equation 1:

$$S = 10^{((|RSSI|-A)/10\times n)} \qquad \text{Equation 1}$$

In Equation 1, A represents the power of the received signal when the signal is transmitted 1 m; n represents a transmission factor of which the magnitude depends on a propagation environment of the wireless signal.

The values of A and n may be obtained by calculation and data fitting, for example, the values may be updated in real time based on the current environment, and at this time, the updated value may be transmitted to the server device 110 and the client device 130 as configuration parameters. Based on the above formula, the received signal strengths for different regions may be determined, and the corresponding transmission power may be determined. With the above exemplary implementation, the effects of various factors in the surrounding environment on the transmission may be considered. In particular, if the propagation conditions in the road environment are poor and the distance is long, the broadcast needs to be performed with a large power. If the propagation conditions to the environment are good and the distance is close, the broadcast may be performed with a small power.

According to an exemplary implementation of the present disclosure, traffic command information associated with a road environment may also be collected and the data package may be updated based on traffic command information. For example, the traffic command information may include indication information of traffic lights in the road environment, information at bulletin boards on both sides of the road, and the like. Here, the above information may be obtained directly from the control device at the traffic signal or the bulletin board. Alternatively, the above information may also be obtained directly from the traffic command center.

It will be appreciated that in this implementation merely relevant information for traffic facilities located within a particular range may be obtained. For example, in the example of Fig. 2, assuming that the traffic light is included in the first region 220, the data of the traffic light may be acquired at this time and the data is added to the first data packet 232. Assuming that the traffic bulletin board is included in the second region 222, the data of the traffic bulletin board may be acquired at this time and the data is added to the second data packet 230. With the above exemplary implementation, rich traffic information may be added to the data package to assist in the driving behavior of the vehicle.

According to an exemplary implementation of the present disclosure, objects in a subset may be divided into static objects and moving objects. Then, respective static data packets and moving data packets may be respectively generated based on the portions associated with the static objects and the moving objects in the collection data, respectively. It will be appreciated that since the position and state of a static object (e.g., roadside building, lane lines, etc.) does not change, the static data packet may be transmitted at a lower transmission frequency. Since the position and state of a moving object (for example, a vehicle, a bicycle, or a pedestrian on a road, etc.) are constantly changing, it is necessary to transmit the moving data packet at a higher transmission frequency.

In general, the potential recipient of the data packet is the client device 130 located at the moving vehicle 132, and when the vehicle 132 is traveling at high speed through the region covered by the server device 110, a low transmission frequency may cause that the vehicle 132 have passed through the coverage region before two adjacent broadcasts. Thus, it is desirable to ensure that the vehicle 132 is capable of receiving at least one stationary data packet during its passage through the coverage region. This may be achieved by adjusting the frequency of broadcasting static packets. For example, a static data packet may be broadcasted every 100 ms, or at other time intervals (e.g., 80 ms). For another example, the moving data packet may be broadcasted every 10 ms, or at other time intervals (e.g., 8 ms). With the above exemplary implementation, by distinguishing between static objects and moving objects in a road environment, a limited transmission bandwidth may be prioritized for transmitting data about moving objects. In this way, the transmission bandwidth may be further utilized efficiently.

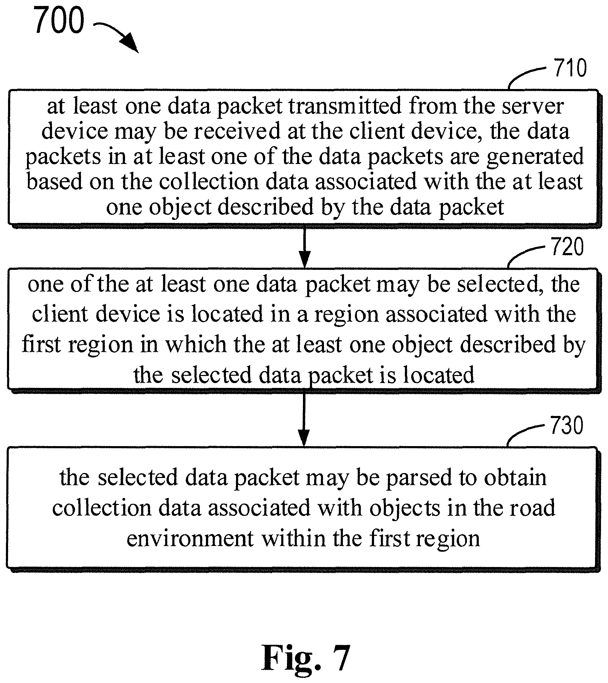

The flow of a method 300 for transmitting collection data performed at the server device 110 has been described above, and details of a method for receiving collection data performed at the client device 130 will be described hereinafter with reference to Fig. 7. Fig. 7 schematically illustrates a flow chart of a method 700 for receiving data in accordance with an exemplary implementation of the present disclosure. It will be appreciated that the client device 130 herein may be deployed at a variety of vehicles 132, for example, may be deployed at a vehicle driven by a general driver, at an automatically driven vehicle, or at a test vehicle configured to collect road environment conditions.

At block 710, at least one data packet transmitted from the server device 110 may be received at the client device 130. The data packets in at least one of the data packets are generated based on the collection data associated with the at least one object described by the data packet. Referring to Fig. 2, each data packet received by the client device 130 is generated based on the region in which the object described by the data packet is located. For example, the client device located in the first region 220 may receive the first data packet 232 and the second data packet 230, and the client device located in the second region 222 may receive the second data packet 230.

When the server device 110 covers more ranges, for example, there is another ring-shaped third region outside the second region 222, then the client devices in the three regions will receive different numbers of data packets. At this time, the client device located in the first region 220 may receive the first data packet 232, the second data packet 230, and the third data packet about the object located in the third region, and the client located in the second region 222 may receive the second data packet 230 and the third data packet, and the client device located in the third region may receive the third data packet.

At block 720, one of the at least one data packet may be selected. Here, the client device is located in a region associated with the first region in which the at least one object described by the selected data packet is located. It will be understood that since the client device located in the vicinity of the server device 110 not only receives the data packet of interest to itself, but also receives the data packet out of interest for the farther region, and at this time, it is necessary to select the interested data packages therefrom. With the above exemplary implementation, for a vehicle located within a certain region, the client device deployed on the vehicle may select only collection data regarding objects within the region of interest. In this way, the computational resources and time overhead of processing the received broadcast data at the client device may be reduced.

In accordance with an exemplary implementation of the present disclosure, the client device 130 may select a data packet that matches the region where the client device 130 is located based on the signal strength associated with the at least one data packet. It will be appreciated that where the distance between the server device 130 and the client device 110 is constant, the greater the transmission power of the server device 110, the stronger the signal strength received at the client device 130. For the server device 110, when broadcasting a data packet to each of the surrounding regions, the transmission power is gradually increased in accordance with the distance between the region and the server device 110 from near to far. Assuming that the transmission powers of the first data packet 232 and the second data packet 230 are Power1 and Power2 respectively, then Power1<Power2.

For the client device located in the first region 220, the first data packet 232 and the second data packet 230 will be received. At this time, since Power1<Power2, the relationship between the received signal strengths RSSI1 and RSSI2 for the first data packet 232 and the second data packet 230 at the client will be: RSSI1 < RSSI2. At this time, by comparing the received signal strengths of the two data packets, it may be determined that the data packet with a small received signal strength is the first data packet 232. In other words, the data packet associated with the smaller strength of the received signal is the data packet of interest to the client device 130. For the client device 130 located in the second region 222, the first data packet 232 does not reach the second region 222 because the transmission power of the first data packet 232 is low. Then, the client device located in the second region 222 may only receive the second data packet 230. With the above exemplary implementation, the data packet of interest may be determined by simply comparing the received signal strength without parsing the contents of the packet.

According to an exemplary implementation of the present disclosure, a data packet of interest may also be selected based on a reception time of a data packet. It will be appreciated that since the server device 110 transmits individual data packets at different points in time, the reception time of each data packet at the client device 130 also corresponds to the transmission time in the order of precedence. It is assumed that each data packet is transmitted one by one at the server device 110 in order from near to far, and waits for the next transmission time after all the data packets have been transmitted. At this time, at the client device 130, the first received data packet is the data packet of interest.

Returning to the example of Fig. 2, assume that the server device has transmitted the first data packet 232 and the second data packet 230 in succession. The client located in the first region 220 will first receive the first data packet 232 and then receive the second data packet 230. At this time, the first data packet 232 received first may be selected and the second data packet 230 received thereafter is discarded. In the second region 222, the first data packet 232 does not reach the second region 222 because the transmit power of the first data packet 232 is low. Then, the client device located in the second region 222 may only receive the second data packet 230. With the above exemplary implementation, the data packet of interest may be determined by simply comparing the reception time without parsing the contents of the packet.

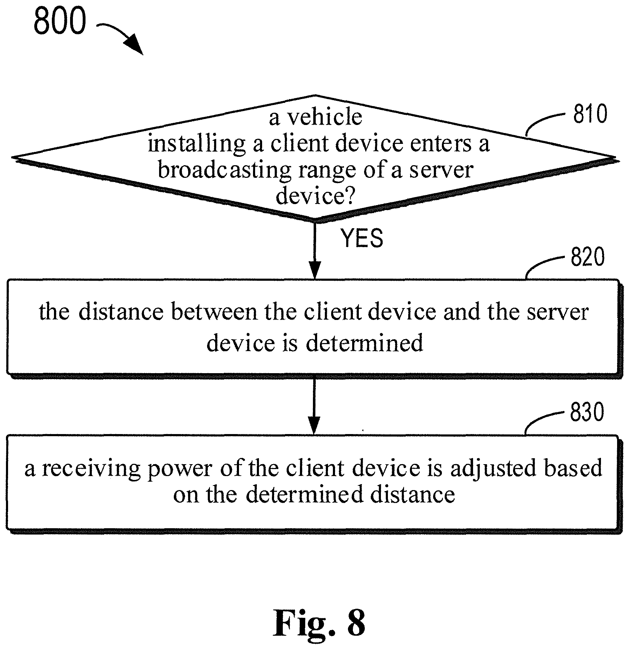

Since the vehicle 132 may be in a traveling state, and as the vehicle 132 moves, the distance between the client device 130 at the vehicle 132 and the server device 110 is constantly changing. According to an exemplary implementation of the present disclosure, the received power of the client device 130 may be adjusted based on the change in distance. Fig. 8 schematically illustrates a flow chart of a method 800 for adjusting a received power of a client device 130 in accordance with an exemplary implementation of the present disclosure.

As shown in Fig. 8, at block 810, it may be determined whether a vehicle 132 installing a client device 130 enters a coverage of a server device 110. The client device 130 may continuously detect whether a broadcast signal may be received to determine whether to enter the coverage. Alternatively, a message on the coverage of the server device 110 may also be received from the central control device to determine whether to enter the coverage. If the determination is yes, the method 800 proceeds to block 820 to determine the distance between the client device 130 and the server device 110. Then, at block 830, the receiving power of the client device 130 may be adjusted based on the determined distance. With the above exemplary implementation, the received power of the client device 130 may be adjusted based on the distance between the client device and the server device to ensure that the client device 130 is configured to a receiving power suitable for receiving the broadcast of interest.

At block 730, the selected data packet may be parsed to obtain collection data associated with objects in the road environment within the first region. Here, the client device 130 is deployed at the vehicle 132 such that the acquired collection data may be further used to control the travel of the vehicle 132. For example, when the collected data indicates that a pedestrian crossing the road appears in front of the vehicle 132, an auxiliary brake function may be activated, or a voice prompt of "Pay attention to the pedestrian ahead!" or other prompt messages may be played to the driver. For another example, when the collection data indicates that the green light in front of the vehicle 132 has just turned yellow, a speech prompt of "Attention to the front light!" or other prompt messages may be played to the driver.

With the exemplary implementation described above, the collection data from server device 110 may be applied to automatic control of vehicle 132. For an autonomous vehicle, the received collection data may be used with the data collected by the collection device located at the vehicle itself to control the driving state of the vehicle. For a vehicle driven by a human driver, the received data may assist the driver in judging the road conditions around the current vehicle, and then take corresponding measures.

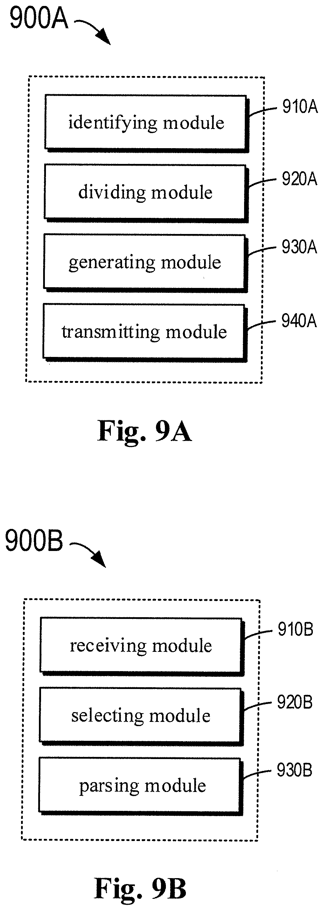

Fig. 9A schematically illustrates a block diagram of an apparatus 900A for transmitting collection data in accordance with an exemplary implementation of the present disclosure. The apparatus 900A includes an identifying module 910A configured to identify a set of objects in a road environment based on collection data associated with the road environment from a server device; and a dividing module 920A configured to divide the set of objects into at least one subset based on a distance between each of the set of objects and the server device; a generating module 930A configured to generate, for a subset in the at least one subset, a data packet based on a portion of the collection data associated with objects in the subset; and transmitting module 940A configured to transmit the data packet to at least one client device, the at least one client device being located in a region associated with a first region where the objects in the subset are located.

According to an exemplary implementation of the present disclosure, the transmission module 940A includes a determining module configured to determine a transmission power for broadcasting the data packet, and a broadcasting module configured to broadcast the data packet based on the transmission power, such that the data packet is received by the at least one client device.

According to an exemplary implementation of the present disclosure, the determining module includes: a distance determining module, configured to determine a distance range between the at least one client device and the server device based on the region; and a power determining module, configured to determine the transmission power based on the distance range.

According to an exemplary implementation of the present disclosure, the first region is a subset of the region.

According to an exemplary implementation of the present disclosure, the power determining module includes: a transmission factor obtaining module, configured to obtain a transmission factor of a broadcast signal transmitted in the road environment; a distance determining module, configured to determine a maximum distance value in the distance range; a threshold obtaining module, configured to obtain a receiving power threshold of the at least one client device; and a transmission power determining module, configured to determine the transmission power based on the transmission factor, the maximum distance value and the receiving power threshold.

According to an exemplary implementation of the present disclosure, the generating module 930A includes a collecting module, configured to collect traffic command information associated with the road environment; and an updating module, configured to update the data packet based on the traffic command information.

According to an exemplary implementation of the present disclosure, the apparatus 900A further includes: a classifying module, configured to classify the objects in the subset into static objects and moving objects; in which the generating module is further configured to generate a static data packet based on a portion of the collection data associated with the static objects, and to generate a motion data packet based on a portion of the collection data associated with the moving objects; and the transmitting module is further configured to transmit the static data packet with a first transmission frequency and to transmit the motion data packet with a second transmission frequency, the first transmission frequency being lower than the second transmission frequency.

Fig. 9B schematically illustrates a block diagram of an apparatus 900B for transmitting collection data in accordance with an exemplary implementation of the present disclosure. The apparatus 900B includes a receiving module 910B configured to receive, at a client device, at least one data packet transmitted from a server device, a data packet in the at least one data packet being generated based on collection data associated with at least one object described by the data packet; a selecting module 920B configured to select a data packet from the at least one data packet, the client device being located in a region associated with a first region where the at least one object described by the data packet selected is located; and a parsing module 930B, configured to parse the data packet selected to obtain collection data associated with objects in the road environment within the first region.

According to an exemplary implementation of the present disclosure, the selecting module 920B is configured to select the data packet based on at least one of: a receiving signal intensity and a receiving time associated with the at least one data packet.

According to an exemplary implementation of the present disclosure, the client device is deployed at a vehicle, and the apparatus further comprises: a controlling module, configured to control traveling of the vehicle based on the collection data.

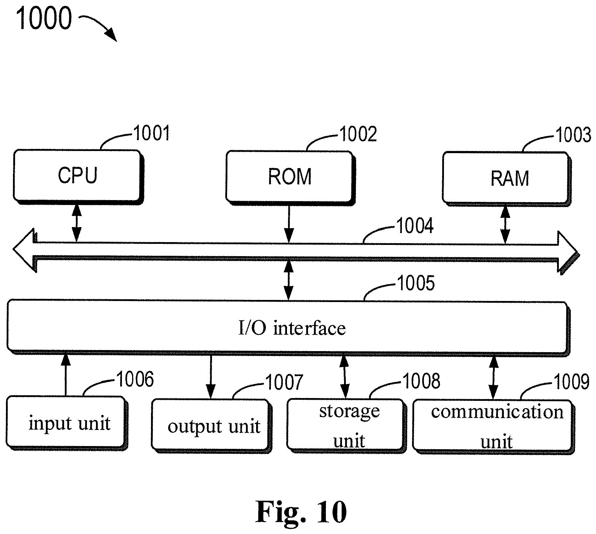

Fig. 10 illustrates a block diagram of a computing device 1000 capable of implementing various implementations of the present disclosure. The device 1000 may be used to implement the methods described in Figs. 3 and 6. As shown, the device 1000 includes a central processing unit (CPU) 1001 that may be loaded into a computer in random access memory (RAM) 1003 according to computer program instructions stored in read only memory (ROM) 1002 or computer program instructions loaded from storage unit 1008 to the RAM 1003, to perform various appropriate actions and processes. In various the RAM 1003, various programs and data required for the operation of the device 1000 may also be stored. The CPU 1001, the ROM 1002, and the RAM 1003 are connected to each other via a bus 1004. An input/output (I/O) interface 1005 is also coupled to the bus 1004.

A plurality of components in the device 1000 are connected to the I/O interface 1005, including: an input unit 1006, such as a keyboard, a mouse, etc.; an output unit 1007, such as various types of displays, speakers, etc.; a storage unit 1008, such as a disk, an optical disk etc.; and a communication unit 1009, such as a network card, a modem, a wireless communication transceiver, etc. The communication unit 1009 allows the device 1000 to exchange information/data with other devices via a computer network such as the Internet and/or various telecommunication networks.

The processing unit 1001 performs various methods and processes described above, such as the methods 300 and 600. For example, in some embodiments, the methods 300 and 600 may be implemented as a computer software program that is tangibly included in a machine readable medium, such as a storage unit 1008. In some embodiments, some or all of the computer program may be loaded and/or installed on the device 1000 via the ROM 1002 and/or the communication unit 1009. One or more steps of process 400 described above may be performed when a computer program is loaded into the RAM 1003 and executed by the CPU 1001. Alternatively, in other embodiments, CPU 1001 may be configured to perform the methods 300 and 600 by any other suitable means (e.g., by means of firmware).

According to an exemplary implementation of the present disclosure, a computer readable storage medium having a computer program stored thereon is provided. The method described in this disclosure is implemented when the program is executed by a processor.

The functions described above herein may be performed at least in part by one or more hardware logic components. For example, and without limitations, exemplary types of hardware logic components that may be used include:

Field Programmable Gate Arlight (FPGA), Application Specific Integrated Circuit (ASIC), Application Specific Standard Product (ASSP), a system of System on Chip (SOC), Load Programmable Logic Device (CPLD) and the like.

Program codes for implementing the method of the present disclosure may be written in any combination of one or more programming languages. The program codes may be provided to a processor or controller of a general purpose computer, special purpose computer or other programmable data processing apparatus, such that the program code, when executed by the processor or controller, enables the functions/operations specified in the flowcharts and/or block diagrams being implemented. The program codes may be entirely or partly executed on a machine, partly executed as an independent software package on the machine, and partly executed on a remote machine or entirely executed on the remote machine or a server.

In the context of the present disclosure, a machine readable medium may be a tangible medium that may contain or store a program for use by an instruction execution system, apparatus or device or a combination thereof. The machine readable medium may be a machine readable signal medium or a machine readable storage medium. A machine-readable medium may include, but is not limited to, an electronic, magnetic, optical, electromagnetic, infrared, or semiconductor system, apparatus, or device, or any suitable combination thereof. More specific examples of machine readable storage medium may include electrical connections based on one or more wires, a portable computer disk, a hard disk, a random access memory (RAM), a read only memory (ROM), an erasable programmable read only memory (EPROM or flash memory), optical fiber, a portable compact disk read only memory (CD-ROM), an optical storage device, a magnetic storage device, or any suitable combination thereof.

In addition, although the operations are depicted in a particular order, this should be understood to require such operations being performed in the illustrated particular order or in the order successively, or all illustrated operations being performed to achieve the desired results. Multitasking and parallel processing may be advantageous in certain circumstances. Likewise, although several specific implementation details are included in the above discussion, these should not be construed as limiting the scope of the disclosure. Certain features that are described in the context of separate embodiments may also be implemented in combination in a single implementation. Conversely, various features that are described in the context of a single implementation may be implemented in a plurality of implementations, either individually or in any suitable sub-combination.

**Claims**

1. A method for transmitting data, applicable to a server device, comprising:

   identifying (310) a set of objects in a road environment based on collection data associated with the road environment from a server device;
   dividing (320) the set of objects into subsets based on distances between the objects and the server device;
   for each subset, generating (330) a data packet based on a portion of the collection data associated with objects in the subset; and
   transmitting (340) the data packet to at least one client device, the at least one client device being located in a region associated with a first region where the objects in the subset are located.

2. The method of claim 1, wherein transmitting the data packet comprises:

   determining a transmission power for broadcasting the data packet; and
   broadcasting the data packet based on the transmission power, such that the data packet is received by the at least one client device.

3. The method of claim 2, wherein determining the transmission power comprises:

   determining a distance range between the at least one client device and the server device based on the region; and
   determining the transmission power based on the distance range.

4. The method of claim 3, wherein the first region is a subset of the region.

5. The method of claim 4, wherein determining the transmission power comprises:

   obtaining a transmission factor of a broadcast signal transmitted in the road environment;
   determining a maximum distance value in the distance range;

obtaining a receiving power threshold of the at least one client device; and
determining the transmission power based on the transmission factor, the maximum distance value and the receiving power threshold.

6. The method of one of claims 1 to 5, wherein generating the data packet further comprises:

collecting traffic command information associated with the road environment; and
updating the data packet based on the traffic command information.

7. The method of one of claims 1 to 6, further comprising:

classifying the objects in the subset into static objects and moving objects;
generating a static data packet based on a portion of the collection data associated with the static objects, and generating a motion data packet based on a portion of the collection data associated with the moving objects; and
transmitting the static data packet with a first transmission frequency and
transmitting the motion data packet with a second transmission frequency, the first transmission frequency being lower than the second transmission frequency.

8. The method of claim 1, wherein a client device is configured to receive data packets, select a data packet from the data packets and parse the data packet selected to obtain collection data associated with objects in the road environment within the first region.

9. The method of claim 8, wherein
the client device is configured to select the data packet by receiving signal intensities and/or receiving times associated with the data packets.

10. The method of claim 9, wherein the client device is deployed at a vehicle, and the client device is configured to control traveling of the vehicle based on the collection data.

11. An apparatus for transmitting data, configured in a server device, comprising:

an identifying module (910A), configured to identify a set of objects in a road environment based on collection data associated with the road environment from a server device;
a dividing module (920A), configured to divide the set of objects into subsets based on distances between the objects and the server device;
a generating module (930A), configured to generate, for each subset, a data packet based on a portion of the collection data associated with objects in the subset; and
a transmitting module (940A), configured to transmit the data packet to at least one client device, the at least one client device being located in a region associated with a first region where the objects in the subset are located.

12. The apparatus of claim 11, wherein the transmitting module (940A) comprises:

a determining module, configured to determine a transmission power for broadcasting the data packet; and
a broadcasting module, configured to broadcast the data packet based on the transmission power, such that the data packet is received by the at least one client device.

13. A system for receiving data, comprising the server device of any of claims 11 to 12 and a client device, wherein the client device is configured to receive data packets, select a data packet from the data packets and parse the data packet selected to obtain collection data associated with objects in the road environment within the first region.

14. A computer-readable storage medium having a computer program stored thereon, the computer program being executed by a processor to implement the method according to any of claims 1-10.

**Patentansprüche**

1. Verfahren zur Übertragung von Daten, das auf eine Server-Vorrichtung anwendbar ist, umfassend:

Identifizieren (310) einer Menge von Objekten in einer Straßenumgebung auf Basis von mit der Straßenumgebung assoziierten Sammeldaten von einer Server-Vorrichtung;

Aufteilen (320) der Menge von Objekten in Teilmengen auf Basis von Entfernungen zwischen den Objekten und der Server-Vorrichtung;

Erzeugen (330) eines Datenpakets für jede Teilmenge auf Basis eines mit Objekten in der Teilmenge assoziierten Teils der Sammeldaten; und

Übertragen (340) des Datenpakets an mindestens eine Client-Vorrichtung, wobei sich die mindestens eine Client-Vorrichtung in einem Bereich befindet, der mit einem ersten Bereich assoziiert ist, in dem sich die Objekte in der Teilmenge befinden.

2. Verfahren nach Anspruch 1, wobei das Übertragen des Datenpakets Folgendes umfasst:

Bestimmen einer Übertragungsleistung zum Senden des Datenpakets; und

Senden des Datenpakets auf Basis der Übertragungsleistung, so dass das Datenpaket von der mindestens einen Client-Vorrichtung empfangen wird.

3. Verfahren nach Anspruch 2, wobei das Bestimmen der Übertragungsleistung Folgendes umfasst:

Bestimmen einer Entfernungsspanne zwischen der mindestens einen Client-Vorrichtung und der Server-Vorrichtung auf Basis des Bereichs; und

Bestimmen der Übertragungsleitung auf Basis der Entfernungsspanne.

4. Verfahren nach Anspruch 3, wobei der erste Bereich eine Teilmenge des Bereichs ist.

5. Verfahren nach Anspruch 4, wobei das Bestimmen der Übertragungsleistung Folgendes umfasst:

Erhalten eines Übertragungsfaktors eines in der Straßenumgebung übertragenen Sendesignals;

Bestimmen eines Maximalentfernungswerts in der Entfernungsspanne;

Erhalten einer Empfangsleistungsschwelle der mindestens einen Client-Vorrichtung; und

Bestimmen der Übertragungsleistung auf Basis des Übertragungsfaktors, des Maximalentfernungswerts und der Empfangsleistungsschwelle.

6. Verfahren nach einem der Ansprüche 1 bis 5, wobei das Erzeugen des Datenpakets des Weiteren Folgendes umfasst:

Sammeln von mit der Straßenumgebung assoziierten Verkehrsleitungsinformationen; und

Aktualisieren des Datenpakets auf Basis der Verkehrsleitungsinformationen.

7. Verfahren nach einem der Ansprüche 1 bis 6, des Weiteren umfassend:

Klassifizieren der Objekte in der Teilmenge in ruhende Objekte und bewegte Objekte;

Erzeugen eines Ruhedatenpakets auf Basis eines mit den ruhenden Objekten assoziierten Teils der Sammeldaten und Erzeugen eines Bewegungsdatenpakets auf Basis eines mit den bewegten Objekten assoziierten Teils der Sammeldaten; und

Übertragen des Ruhedatenpakets mit einer ersten Übertragungsfrequenz und Übertragen des Bewegungsdatenpakets mit einer zweiten Übertragungsfrequenz, wobei die erste Übertragungsfrequenz geringer als die zweite Übertragungsfrequenz ist.

8. Verfahren nach Anspruch 1, wobei eine Client-Vorrichtung dazu eingerichtet ist, Datenpakete zu empfangen, ein Datenpaket aus den Datenpaketen auszuwählen und das ausgewählte Datenpaket zu parsen, um mit Objekten in der Straßenumgebung innerhalb des ersten Bereichs assoziierte Sammeldaten zu erhalten.

9. Verfahren nach Anspruch 8, wobei die Client-Vorrichtung dazu eingerichtet ist, das Datenpaket anhand von mit den Datenpaketen assoziierten Empfangssignalintensitäten und/oder Empfangszeiten auszuwählen.

10. Verfahren nach Anspruch 9, wobei die Client-Vorrichtung an einem Fahrzeug eingesetzt wird und die Client-Vorrichtung dazu eingerichtet ist, einen Fahrbetrieb des Fahrzeugs auf Basis der Sammeldaten zu steuern.

**11.** Vorrichtung zum Übertragen von Daten, die in einer Server-Vorrichtung eingerichtet ist, umfassend:

ein Identifizierungsmodul (910A) zur Identifizierung einer Menge von Objekten in einer Straßenumgebung auf Basis von mit der Straßenumgebung assoziierten Sammeldaten von einer Server-Vorrichtung;
ein Aufteilungsmodul (920A) zur Aufteilung der Menge von Objekten in Teilmengen auf Basis von Entfernungen zwischen den Objekten und der Server-Vorrichtung;
ein Erzeugungsmodul (930A) zur Erzeugung eines Datenpakets für jede Teilmenge auf Basis eines mit Objekten in der Teilmenge assoziierten Teils der Sammeldaten;
und
ein Übertragungsmodul (940A) zur Übertragung des Datenpakets an mindestens eine Client-Vorrichtung, wobei sich die mindestens eine Client-Vorrichtung in einem Bereich befindet, der mit einem ersten Bereich assoziiert ist, in dem sich die Objekte in der Teilmenge befinden.

**12.** Vorrichtung nach Anspruch 11, wobei das Übertragungsmodul (940A) Folgendes umfasst:

ein Bestimmungsmodul zur Bestimmung einer Übertragungsleistung zum Senden des Datenpakets; und
ein Sendemodul zum Senden des Datenpakets auf Basis der Übertragungsleistung, so dass das Datenpaket von der mindestens einen Client-Vorrichtung empfangbar ist.

**13.** System zum Empfang von Daten, umfassend die Server-Vorrichtung nach einem der Ansprüche 11 bis 12 und eine Client-Vorrichtung, wobei die Client-Vorrichtung zum Empfang von Datenpaketen, zum Auswählen eines Datenpakets aus den Datenpaketen und zum Parsen des ausgewählten Datenpakets zum Zweck des Erhaltens von mit Objekten in der Straßenumgebung innerhalb des ersten Bereichs assoziierten Sammeldaten eingerichtet ist.

**14.** Computerlesbares Speichermedium mit einem darauf gespeicherten Computerprogramm, wobei das Computerprogramm zur Implementierung des Verfahrens nach einem der Ansprüche 1 bis 10 durch einen Prozessor ausführbar ist.

## Revendications

**1.** Procédé de transmission de données, applicable à un dispositif serveur, comprenant :

identifier (310) un ensemble d'objets dans un environnement routier sur la base de données de collection associées à l'environnement routier d'un dispositif serveur ;
diviser (320) l'ensemble d'objets en sous-ensembles sur la base de distances entre les objets et le dispositif serveur ;
pour chaque sous-ensemble, générer (330) un paquet de données sur la base d'une partie des données de collection associée à des objets dans le sous-ensemble ; et
transmettre (340) le paquet de données à au moins un dispositif client, l'au moins un dispositif client étant situé dans une région associée à la première région où les objets dans le sous-ensemble sont situés.

**2.** Procédé selon la revendication 1, dans lequel la transmission du paquet de données comprend :

déterminer une puissance de transmission pur diffuser le paquet de données ; et
diffuser le paquet de données sur la base de la puissance de transmission de sorte que le paquet de données est reçu par l'au moins un dispositif client.

**3.** Procédé selon la revendication 2, dans lequel la détermination de la puissance de transmission comprend :

déterminer une plage de distance entre l'au moins un dispositif client et le dispositif serveur sur la base de la région ; et
déterminer la puissance de transmission sur la base de la plage de distance.

**4.** Procédé selon la revendication 3, dans lequel la première région est un sous-ensemble de la région.

**5.** Procédé selon la revendication 4, dans lequel la détermination de la puissance de transmission comprend :

obtenir un facteur de transmission d'un signal de diffusion transmis dans l'environnement routier ;
déterminer une valeur de distance maximale dans la plage de distance ;
obtenir un seuil de puissance de réception de l'au moins un dispositif client ; et
déterminer la puissance de transmission sur la base du facteur de transmission, de la valeur de distance maximale et du seuil de puissance de réception.

6. Procédé selon l'une quelconque des revendications 1 à 5, dans lequel la génération du paquet de données comprend en outre :

collecter des informations de commande de trafic associées à l'environnement routier ; et
mettre à jour le paquet de données sur la base des informations de commande de trafic.

7. Procédé selon l'une quelconque des revendications 1 à 6, comprenant en outre :

classifier les objets dans le sous-ensemble en objets statiques et objets mobiles ;
générer un paquet de données statique sur la base d'une partie des données de collection associée aux objets statiques et générer un paquet de données de mouvement sur la base d'une partie des données de collection associée aux objets mobiles ; et
transmettre le paquet de données statique à une première fréquence de transmission et transmettre le paquet de données de mouvement à une deuxième fréquence de transmission, la première fréquence de transmission étant inférieure à la deuxième fréquence de transmission.

8. Procédé selon la revendication 1, dans lequel un dispositif client est configuré pour recevoir des paquets de données, sélectionner un paquet de données parmi les paquets de données et analyser le paquet de données sélectionné afin d'obtenir des données de collection associées à des objets dans l'environnement routier dans la première région.

9. Procédé selon la revendication 8, dans lequel
le dispositif client est configuré pour sélectionner le paquet de données par intensités de signal de réception et/ou temps de réception associés aux paquets de données.

10. Procédé selon la revendication 9, dans lequel le dispositif client est utilisé sur un véhicule et le dispositif client est configuré pour commander la marche du véhicule sur la base des données de collection.

11. Appareil de transmission de données, configuré dans un dispositif serveur, comprenant :

un module d'identification (910A), configuré pour identifier un ensemble d'objets dans un environnement routier sur la base de données de collection associées à l'environnement routier d'un dispositif serveur ;
un module de division (920A), configuré pour diviser l'ensemble d'objets en sous-ensembles sur la base de distances entre les objets et le dispositif serveur ;
un module de génération (930A), configuré pour générer, pour chaque sous-ensemble, un paquet de données sur la base d'une partie des données de collection associée à des objets dans le sous-ensemble ; et
un module de transmission (940A), configurée pour transmettre le paquet de données à au moins un dispositif client, l'au moins un dispositif client étant situé dans une région associée à une première région où les objets dans le sous-ensemble sont situés.

12. Appareil selon la revendication 11, dans lequel le module de transmission (940A) comprend :

un module de détermination, configuré pour déterminer une puissance de transmission pour diffuser le paquet de données ; et
un module de diffusion, configuré pour diffuser le paquet de données sur la base de la puissance de transmission de sorte que le paquet de données est reçu par l'au moins un client.

13. Système de réception de données, comprenant le dispositif serveur selon l'une quelconque des revendications 11 à 12 et un dispositif client, dans lequel le dispositif client est configuré pour recevoir des paquets de données, sélectionner un paquet de données parmi les paquets de données et analyser le paquet de données sélectionnée afin d'obtenir des données de collection associées à des objets dans l'environnement routier dans la première région.

14. Support d'enregistrement lisible par ordinateur, le support d'enregistrement ayant un programme d'ordinateur enregistré sur celui-ci, le programme d'ordinateur étant exécuté par un processeur afin d'implémenter le procédé selon l'une quelconque des revendications 1 à 10.

**Fig. 1**

Fig. 2

300

310

a set of objects in the road environment are identified
based on collection data associated with the road
environment from a server device

320

the set of objects are divided into at least one subset
based on a distance between each of the set of objects
and the server device

330

for a subset in the at least one subset, a data packet is
generated based on a portion of the collection data
associated with objects in the packet

340

the generated data packet is transmitted to at least one
client device, at least one client device is located in a
region associated with the first region in which the
object in the packet is located

# Fig. 3

Fig. 4

500A

510A

| collection data | | | |
|---|---|---|---|
| object identifier | object location | object bounding box | object classification |

520A        522A        524A        526A

**Fig. 5A**

500B

510B

| data packet | | |
|---|---|---|
| collection data of the object 1 | collection data of the object 2 | ... |

520B        522B

**Fig. 5B**

Fig. 6

700 ⟍

710

at least one data packet transmitted from the server device may be received at the client device, the data packets in at least one of the data packets are generated based on the collection data associated with the at least one object described by the data packet

720

one of the at least one data packet may be selected, the client device is located in a region associated with the first region in which the at least one object described by the selected data packet is located

730

the selected data packet may be parsed to obtain collection data associated with objects in the road environment within the first region

**Fig. 7**

800 ⟍↘

a vehicle
installing a client device enters a
broadcasting range of a server
device? ⟋ 810

YES

the distance between the client device and the server
device is determined ⟋ 820

a receiving power of the client device is adjusted based
on the determined distance ⟋ 830

**Fig. 8**

900A

identifying module — 910A

dividing module — 920A

generating module — 930A

transmitting module — 940A

**Fig. 9A**

900B

receiving module — 910B

selecting module — 920B

parsing module — 930B

**Fig. 9B**

1000

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• 3rd Generation Partnership Project; Technical Specification Group Services and System Aspects; Study on enhancement of 3GPP Support for 5G V2X Services (Release 15). *3GPP TR 22.886 V15.1.0,* 17 March 2017, 1-58